# EUROPÄISCHE PATENTSCHRIFT

(11) **EP 1 256 260 B1**
(45) Veröffentlichungstag und Bekanntmachung des Hinweises auf die Patenterteilung: **09.07.2003**
(21) Anmeldenummer: 00903478.6
(22) Anmeldetag: 18.02.2000
(51) Int. Cl.: H04R 29/00, H04R 25/00

(54) **FITTING-ANLAGE**
FITTING SYSTEM
SYSTEME D'ADAPTATION

(43) Veröffentlichungstag der Anmeldung: 13.11.2002
(73) Patentinhaber: PHONAK AG, 8712 Stäfa (CH)
(72) Erfinder: BERG, Christian, CH-8713 Uerikon (CH)
(74) Vertreter: Troesch, Jacques J., Dr. sc. nat.
(86) Internationale Anmeldenummer: CH0000091
(87) Internationale Veröffentlichungsnummer: WO00022874

(56) Entgegenhaltungen:
- WO-A-98/51124
- WO-A-99/03254
- US-A- 5 303 306

## Beschreibung

Die vorliegende Erfindung betrifft eine Fitting-Anlage für die Anpassung eines Hörgerätes an die Bedürfnisse eines Individuums, welche eine Anpasseinheit mit Eingabe-Einrichtung umfasst, die drahtgebunden und/oder drahtlos mit einem Einstell-Steuereingang am Hörgerät wirkverbindbar ist.

Seit der Einführung programmierbarer digitaler Hörgeräte nehmen - nebst speziellen rechnergestützten Fitting-Geräten - Computer, insbesondere PCs, eine dominante Rolle als Anpass- bzw. Fitting-Plattformen für Hörgeräte an die jeweiligen individuellen Bedürfnisse ein. Dabei werden solche Geräte über bekannte Kommunikations-Software drahtlos oder drahtgebunden mit einem Einstell-Steuereingang am üblicherweise in situ angepassten Hörgerät wirkverbunden. Während der Fitting- bzw. Anpass-Prozedur wird die Signalübertragung am Hörgerät - zwischen eingangsseitigem akustisch/elektrischem Wandler und ausgangsseitigem elektrisch/mechanischem Wandler - aufgrund von Einstell-Steuersignalen am erwähnten Steuereingang verändert. Dies nach Massgabe von Hörtests mit bzw. ohne Hörgerät sowie Höreindruck-Aussagen des Individuums. Die meist komplexen Zusammenhänge zwischen einfachen Höreindruck-Aussagen des Individuums und Verstellung von Parametern an der Hörgerät-Signalübertragung werden üblicherweise durch ein Programm am Anpass-Gerät erstellt. Somit macht es eine optimale, individuelle Anpassung von digitalen Hörgeräten praktisch unabdingbar nötig, einen Spezialisten aufzusuchen, welcher über die entsprechend programmierten Anpass-Geräte verfügt und durch sorgfältige Ausbildung mit der komplexen Bedienung und Funktionalität solcher Geräte vertraut ist.

Dieses bei modernen Hörgeräten praktisch unumgängliche Vorgehen schliesst weltweit grosse Personenkreise vom Einsatz solcher Hörgeräte-Technologien aus, denn es fehlt die für die optimale Anpassung notwendige Infrastruktur vielerorts, sowohl was die Geräte und die dazu notwendigen Betriebsumgebungen wie auch was die Ausbildung von Spezialisten anbelangt. Deshalb wird weiterhin verbreitet der Möglichkeit zur Hörgeräte-Anpassung via Trimmer bzw. Schraubenzieher der Vorzug gegeben.

Ist aber die Hörgeräte-Anpassung an das jeweilige Individuum auf letzterwähntes Vorgehen zu beschränken, so ist das Spektrum hierfür einsetzbarer Hörgeräte, insbesondere was moderne, digitale Hörgeräte anbelangt, beschränkt. Auch wenn hardwaremässig an derartigen Hörgeräten eine Vielzahl für die Abstimmung notwendiger Trimm-Möglichkeiten vorgesehen und eindeutig identifizierbar ausgebildet wird, bedingt das konstruktiv am Hörgerät hohe Mehraufwendungen, führt aufgrund mechanisch bewegter Teile zu höherer Reparaturanfälligkeit, ganz abgesehen davon, dass kaum die für optimale Hörhilfe teilweise notwendige, komplexe und gegenseitig abhängige Parameter-Einstellung vorgenommen werden kann.

Es ist Aufgabe der vorliegenden Erfindung, diese Probleme zu lösen und eine Möglichkeit zu schaffen, auch modernen Hörgeräten weitestmögliche Verbreitung zu sichern.

Zu diesem Zweck wird eine Fitting-Anlage eingangs genannter Art vorgeschlagen, bei der die Eingabe-Einrichtung ein Mobiltelefongerät ist. Dabei wird primär von der Einsicht ausgegangen, dass, im Unterschied zu PCs oder andern Fitting-spezifischen Geräten, Mobiltelefongeräte weltweit überall verbreitet sind und ihre Handhabung mehr und mehr zum Alltag gehört. Aufgrund der Verbreitung von Mobiltelefongeräten sowie der Routine mit ihrer Bedienung und Menu-Steuerung wird die gestellte Aufgabe sogar soweit gelöst, dass gegebenenfalls die Hörgeräte-Anpassung vom Individuum selber vorgenommen werden kann, insbesondere dann, wenn, wie noch auszuführen sein wird, die entsprechende On-line-Unterstützung zum Mobiltelefongerät vorliegt.

In einer bevorzugten Ausführungsform der erfindungsgemässen Fittinganlage erfolgt die Wirkverbindung zwischen Mobiltelefongerät und Hörgerät über einen Umsetzer. Dabei erfolgt diese Verbindung zwischen Mobiltelefongerät einerseits und Umsetzer anderseits über eine Mobiltelefon-eigene HF-Verbindung und/oder über eine Infrarot-Verbindung und/oder über eine akustische Verbindung. Zwischen dem Umsetzer und dem Hörgerät anderseits erfolgt die erwähnte Kommunikationsverbindung drahtgebunden und/oder drahtlos.

Dabei kann eine drahtlose Kommunikationsverbindung zwischen Umsetzer und Hörgerät akustisch oder auch gegebenenfalls über eine Hörgerät-adäquate Hochfrequenz-Verbindung oder über eine IR-Verbindung erfolgen. Eine akustische Kommunikationsverbindung kann aber auch gegebenenfalls direkt zwischen Mobiltelefongerät und Hörgerät vorgesehen sein, ohne dazwischengeschalteten Umsetzer.

Weiter wird bevorzugterweise der Umsetzer als selbständige Einheit ausgebildet oder ist im Hörgerät oder im Mobiltelefongerät integriert.

In einer bevorzugten Ausführungsform ist das erfindungsgemäss eingesetzte Mobiltelefongerät für die Kommunikation mit einem Kommunikationsnetz ausgebildet, vorzugsweise mit dem Internet und/oder einem Intranetz. Damit ist die Möglichkeit geschaffen, einerseits für die Hörgerät-Anpassung, aber auch für die Software-Konfiguration des Hörgerätes selber sowie für jeweilige Updates die Möglichkeiten voll auszunützen, welche durch derartige Netze auch unter Einbezug von E-Commerce, d.h. elektronischer Bestellung und elektronischen Kaufs, gegeben sind.

Dadurch, dass die erfindungsgemässe Fitting-Anlage weiter einen Server umfasst und das Mobiltelefongerät zur Kommunikation mit diesem Server ausgebildet ist und weiter zwischen Server und Mobiltelefongerät mindestens eine der folgenden Daten-Arten, nämlich
- Fitting-Programme
- Hörgerät-Software
- Updates für Fitting-Programme und/oder Hörgerät-Software
übertragen werden, wird mit dem erfindungsgemässen Vorgehen erreicht, dass Fitting-Programme, gegebenenfalls nicht Speicherresident, ab Mobiltelefongerät in jeweils neuster Version eingesetzt werden können und/oder dass die Programm-Konfiguration am Hörgerät sowie die Aktualisierung dieser Programme mit wenig Aufwand realisiert werden kann. Während im ersten Fall, nämlich dem Herunterladen von Fitting-Programmen von einem Server, letztere, wenn auch gegebenenfalls nur während der Fitting-Prozedur, im Mobiltelefongerät abgelegt und ab letzterem für die Hörgerät-Anpassung eingesetzt werden, wird im zweiterwähnten Fall, nämlich dem Herunterladen von Hörgerät-Programmen, das Mobiltelefongerät nur mehr als manuelle Steuerkonsole und als Transitstation eingesetzt, gegebenenfalls zusammen mit dem erwähnten Umsetzer, um vom Server gelieferte Hörgeräte-Software schliesslich an das Hörgerät zu übermitteln.

In einer weitergehenden Ausführungsform, bei welcher die erfindungsgemässe Anlage wiederum einen Server umfasst und das Mobiltelefongerät zur Kommunikation mit diesem Server ausgebildet ist, werden dazwischen folgende Daten übertragen:
- Hörgerät-Individualdaten vom Mobiltelefongerät an den Server und/oder
- Hörgerät-individuelle Stelldaten vom Server ans Mobiltelefongerät.

Damit ist die Möglichkeit geschaffen, am Server die jeweilig momentanen Einstellungen des individuellen Hörgeräts abzulegen und praktisch dessen Updates und Einstellungsgeschichte zu speichern, so dass vom Individuum über das Mobiltelefongerät an den Server, im Sinne von zu optimierenden Höreindrücken, individuelle Höreindruckdaten übermittelt werden können, am Server unter deren Berücksichtigung und Berücksichtigung der Individual-Hörgerät-Vorgeschichte und der Momentaneinstellungen des Hörgerätes, über das Mobiltelefongerät, direkt Veränderungen und Verstellungen am Hörgerät vorgenommen werden können. Bei diesem Vorgehen wird die fachmännische Einstellungsoptimierung für das individuelle Hörgerät an den Server verlagert, der beispielsweise durch eine Hörgeräte-Firma oder einen Hörgerät-Firmenverbund betrieben wird.

Wie erwähnt, können dabei derartige zusätzliche Dienstleistungen in für den E-Commerce üblicher Art und Weise, sei dies im Abonnement, sei dies durch fallspezifische Bestellung und Bezahlung, finanziell abgegolten werden.

Gemäss der vorliegenden Erfindung kann an der erfindungsgemässen Fitting-Anlage das eingesetzte Mobiltelefongerät somit, praktisch in Minimalausführung, losgelöst von seiner eigentlichen Telefonfunktion sozusagen als elektronischer Schraubenzieher eingesetzt werden. Bevorzugterweise über den erwähnten Umsetzer wird eine Kommunikationsverbindung mit dem oder den Hörgeräten erstellt und das Mobiltelefongerät durch manuelle Eingabe und/oder durch Spracheingabe menugesteuert in eine Hörgerät-Anpassmode geschaltet. Danach werden von einem das Hörgerät tragenden Individuum selber oder von einem Spezialisten Übertragungsparameter am Hörgerät durch Bedienung der Eingabe verstellt. Ob hierzu ein Spezialist einzusetzen ist oder das Individuum diese Handlungen selber vornehmen kann, hängt weitgehend davon ab, wie weit das am Hörgerät implementierte Anpass- bzw. Fitting-Programm in der Lage ist, einfache Höreindruck-Eingaben in komplexere Parameter-Verstellungszusammenhänge für das Hörgerät umzusetzen.

Insbesondere dann, wenn angestrebt wird, dass das Individuum selber die oder eine Hörgerät-Anpassung vornehmen können soll, wird vorgeschlagen, dass man vorgenommene Verstellungen am Hörgerät auf Standard-Einstellungen rücksetzen kann durch einfache manuelle Eingabe am Mobiltelefongerät, seien derartige Standard-Einstellungen von Spezialisten vorgängig erstellte Einstellungen, die als solche definiert wurden, seien diese Standard-Einstellungen werkseitig vorgenommene Einstellungen. Wie erwähnt, ist es durch entsprechende Programmierung des Hörgerätes durchaus möglich, durch einfache Eingabe am Hörgerät definierte Höreindrücke des Individuums in komplexe Mehrparameter-Hörgeräteanpassungen umzusetzen und diese dem Hörgerät zu übermitteln.

In einer dann weitergehenden Ausbildung der erfindungsgemässen Fitting-Anlage wird ermöglicht, auch firmenspezifisch (Intranet), branchenspezifisch (Intranet) oder weltweit verteilt (Internet) auf Datenbanken und Rechenleistungen zuzugreifen.

Werden diese Möglichkeiten ab dem erfindungsgemäss eingesetzten Mobiltelefongerät eingesetzt, so entfernt sich das erfindungsgemäss eingesetzte Mobiltelefongerät mehr und mehr von seiner Funktion als elektronischer Schraubenzieher und wird letztendlich nurmehr zur Schnittstelle zwischen unterschiedlichen Übertragungen, wie Übertragungsprotokollen und wird zur Eingabetastatur für die Auslösung einer Server-Hörgerät-Verbindung.

Es sei an dieser Stelle betont, dass, wenn in vorliegender Beschreibung und in den Ansprüchen von einem erfindungsgemäss eingesetzten Mobiltelefongerät gesprochen wird, dies Geräte mitumfasst, welche nebst der eigentlichen Mobiltelefonfunktion noch weitere Funktionen aufweisen, wie dies in zunehmendem Masse beispielsweise von digitalen Agenden, DPA etc. bekannt ist.

Somit kann ein Teil der erfindungsgemässen Fitting-Anlage bildender Server nicht nur hörgerätetypspezifische Information über das Mobiltelefongerät zur Verfügung stellen - die individuellen Hörgeräte-Anpassungen werden dann weiterhin durch Bedienung des Mobiltelefongerätes vorgenommen - sondern es werden an diesem Server auch Identifikationsgrössen abgespeichert, welche nebst dem Hörgerätetyp auch die individuell angepassten Parameter, wie erwähnt die "Einstellungs-Geschichte" des Hörgerätes oder der Hörgeräte beinhalten. Von diesem Server kann dann bei Aufruf und Identifizierung über das Mobiltelefongerät und Übermittlung noch verbleibender Höreindruckmängel, ausgehend von der am Server abgelegten momentanen ParameterKonstellation und gegebenenfalls der Vorgeschichte von gemeldeten Höreindruckmängeln und vorgenommenen Parameteränderungen, eine weitere Optimierung der Hörgeräteeinstellung via Mobiltelefongerät an das Hörgerät übermittelt werden. Es wird nun möglich, sowohl hörgerätetypspezifische Informationen für die Ansteuerung der Telefongerät-Recheneinheit abzurufen, oder die Rechenleistung vom Mobiltelefongerät an den Server auszulagern und wie erwähnt das Mobiltelefongerät eigentlich nurmehr als Eingabe- und Transitstation zwischen Hörgerät einerseits und Server andererseits einzusetzen. Es ist ersichtlich, dass in diesem Fall die Hörgerät-Einstellung weitestgehend unabhängig davon wird, wer die Einstellungen vornimmt und nurmehr davon abhängig wird, wie das hörgerättragende Individuum Höreindrücke wahrnimmt.

Die Erfindung wird anschliessend beispielsweise anhand von Figuren erläutert. Diese zeigen:
- Fig. 1: in Form eines vereinfachten Funktionsblockdiagrammes, eine erste Realisationsvariante einer erfindungsgemässen Fitting-Anlage,
- Fig. 2: in Form eines vereinfachten Signalfluss/Funktions-blockdiagrammes, eine bevorzugte Ausführungsform der Anlage nach Fig. 1,
- Fig. 3: schematisch das Konzept einer erfindungsgemässen Fitting-Anlage mit Server-Unterstützung.

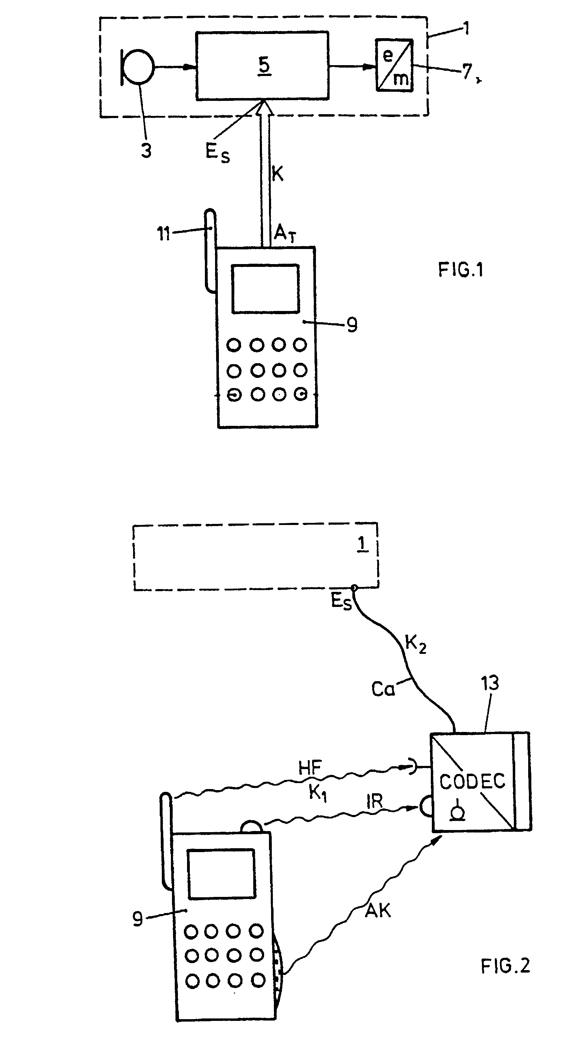

In Fig. 1 ist schematisch ein Hörgerät 1 dargestellt, mit eingangsseitigem akustisch/elektrischem Wandler 3, digitaler Signalübertragungsstrecke 5 und ausgangsseitigem elektro/mechanischem Wandler 7. Die Hörgeräte-Grobanpassung kann vorerst ex situ, z.B. im Labor aufgrund von diagnostischen Daten vorgenommen werden, die Feinanpassung wird jedenfalls in situ, d.h. am Individuum, vorgenommen.

Das Hörgerät weist einen Eingang E_{S} auf. Signale an diesem Eingang E_{S} verändern Übertragungsparameter an der digitalen Übertragungsstrecke 5. Der Eingang E_{S} steht direkt oder indirekt mit einem Ausgang A_{T} eines Mobiltelefongerätes 9 in Kommunikationsverbindung K. Die Verbindung K kann auf unterschiedlichste Art und Weise realisiert werden, wie möglicherweise über die Antenne 11 des Telefongerätes 9 oder über eine Hochfrequenzsignale in digitale Steuersignale für das Hörgerät wandelnde Einheit bzw. Schnittstelle, über Infrarotlink mit entsprechenden Schnittstellen, drahtgebunden - optisch oder elektrisch - oder akustisch. Jedenfalls sind je nach Verbindungsvariante am Hörgerät bzw. am Mobiltelefongerät die entsprechenden Schnittstellen vorgesehen.

In einer bevorzugten Ausführungsvariante gemäss Fig. 2 erfolgt die Kommunikation K zwischen dem Mobiltelefongerät 9 und dem Hörgerät 1 jedoch über einen Umsetzer CODEC 13, bevorzugterweise als separate, praktisch als Relais wirkende, elektrisch unabhängig gespiesene Einheit realisiert. Die Verbindung K₁ zwischen Mobiltelefongerät 9 und Umsetzer 13 einerseits erfolgt über eine mobiltelefoneigene Hochfrequenzverbindung HF und/oder über eine Infrarotverbindung IR und/oder über akustische Kopplung AK. Die Kommunikationsverbindung K₂ zwischen Umsetzer 13 und Hörgerät 1 anderseits, erfolgt in bevorzugter Ausführungsform - elektrisch oder optisch - drahtgebunden, Ca, gegebenenfalls auch (nicht dargestellt) nicht drahtgebunden über eine Hochfrequenzverbindung dem Hörgerät 1 angepasster Art, oder über ein IR-Link oder akustisch. Der Umsetzer 13 kann dabei, wie in Fig. 2 dargestellt, als selbständige Einheit vorgesehen sein oder kann am Mobiltelefongerät 9 oder am Hörgerät 1 integriert sein.

Für die Anpassung des Hörgerätes wird das Mobiltelefongerät 9 durch manuelle und/oder Sprach-Eingabe, z.B. durch Bedienung einer speziellen Tastenkombination, menügesteuert, in den Anpass- bzw. Fitting-Modus geschaltet. Danach werden durch weitere Eigaben Parameter-Änderungssignale über die Kommunikationsverbindung K bzw.K₁, K₂ dem Hörgeräte-Steuereingang E_{S} zugeführt und das Hörgerät bezüglich seines Übertragungsverhaltens gezielt verändert.

Es ist mit der Konfiguration der erfindungsgemässen Fitting-Anlage nach Fig. 1 bzw. 2 vorerst ohne weiteres möglich, einfache Anpassungen am Hörgerät, wie beispielsweise Reduktion der Hochfrequenz-Verstärkung, Anhebung der Tiefton-Übertragung etc., mit einer Eingabemanipulation oder durch Spracheingabe und deren direkte Umsetzung über die Kommunikationsverbindung K bzw. K1, K₂ auf einen einzigen Stellparameter vorzunehmen. Meist ist es aber notwendig, aus einfachen Höreindrücken des das Hörgerät 1 tragenden Individuums hin, wie beispielsweise auf den Eindruck "zu laut", "schrill" etc., eine Mehrzahl von Parametern an der digitalen Übertragungsstrecke 5 des Hörgerätes 1 gezielt und in gegenseitiger Abhängigkeit zu verändern. In einem solchen Fall überträgt entweder der Spezialist, nämlich der Hörgeräte-Akustiker, die verbal kommunizierten Höreindrücke in eine Mehrzahl zu ändernder Übertragungsparameter und bedient die Eingaben des erfindungsgemäss eingesetzten Mobiltelefongerätes 9, oder das am Mobiltelefongerät 9 geladene Fitting-Programm setzt durch einfache Eingaben an das Mobiltelefongerät 9 identifizierte Höreindrücke selbsttätig in die notwendige Anzahl Parameteränderung um, damit gegebenenfalls bestehende komplexe Abhängigkeiten berücksichtigend.

Grundsätzlich kann anstelle von manuellen Eingaben, z.B. mittels Tastatur, am Mobiltelefongerät Spracheingabe erfolgen, sofern das Mobiltelefongerät 9 entsprechend ausgerüstet ist.

Durch Laden hörgerättypspezifischer Programme an das prozessorgesteuerte Mobiltelefongerät 9 werden, mithin, menügesteuert durch manuelle und/oder Spracheingaben, über die Kommunikationsverbindung K bzw. K₁, K₂, Stellsignale an das Hörgerät 1 übermittelt. Diese Programme können ausgebildet sein, um aufgrund von einfachen Eingaben, entsprechend den erwähnten einfachen Höreindrücken, mehr oder weniger komplexe Stellprozeduren am Hörgerät anzusteuern. Die hörgerätspezifischen Programme werden in das Mobiltelefongerät 9 geladen, sei dies z.B. durch Einlegen einer SIM-Karte oder durch anderes externes Laden, worauf noch zurückgekommen wird:

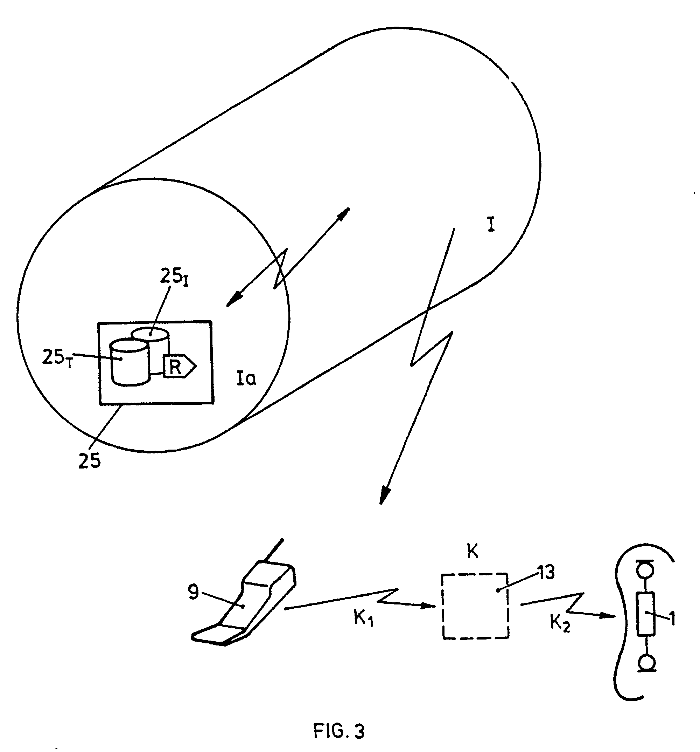

In Fig. 3 sind, ausgehend von den Erläuterungen zu Fig. 1 und 2, die dem Mobiltelefongerät 9 eigenen Kommunikationseigenschaften in die erfindungsgemässe Fitting-Anlage weiter eingebunden. Beispielsweise über das Internet I und/oder ein z.B. firmen- und kundenweites Intranet Ia kommuniziert das erfindungsgemäss vorgesehene Mobiltelefongerät 9 mit einem Server 25. Auf diesem Server 25, der z.B. gemeinsam oder spezifisch von Hörgeräte-Herstellern oder von Drittanbietern betrieben werden kann, sind die den einzelnen Hörgerätetypen zugeordneten Anpassmöglichkeiten und -algorithmen bzw. Fitting-Programme - 25_{T} - abgelegt. Durch Aufruf des Servers 25 mit dem Mobiltelefongerät 9 im Anpassmenü werden dem Telefongerät 9 die notwendigen Fitting-Programme vom Server 25 übermittelt. Damit können vom Telefongerät 9 die notwendigen Parameter-Änderungen über die Kommunikationsverbindung K bzw. K₁, K₂ an das getragene Hörgerät 1 übermittelt werden. Das Fittingprogramm ist über das Netz I, Ia am Mobiltelefongerät 9, gegebenenfalls nur zeitlich begrenzt, geladen, d.h. nur für die Zeitdauer der Anpass-Prozedur.

In einem weitergehenden Einsatz des Servers 25 übermittelt das Telefongerät 9 die momentanen Hörgerät-Einstellungen sowie Veränderungs-Bedürfnisse an den Server 25. Am Server 25 werden nun nicht nur hörgerätetypspezifische Daten, insbesondere Anpassprogramme, wie schematisch dargestellt in der Speichereinheit 25_{T}, abgelegt, sondern auch Individualhörgerät-spezifische Daten wie schematisch mit der Speichereinheit 25_{I} dargestellt. Darin sind Daten, wie z.B. individuelle Höreindrücke und daraus folgend vorgenommene Parameteränderungen sowie gegebenenfalls die Geschichte des Einstellungswerdeganges jeweils individueller Hörgeräte abgelegt. Durch Identifikation kann nun das Individuum über das Mobiltelefongerät 9 sowie durch Eingabe weiterer Höreindrücke bzw. Korrekturwünsche jeweils einen neuerlichen Optimierungszyklus auslösen. Mit der serverresidenten Rechenleistung R wird aufgrund der kürzeren oder längeren abgespeicherten Einstellungsgeschichte des individuellen Hörgerätes 1 und der neuerlich gemeldeten Höreindrücke bzw. Korrekturwünsche, eine neuerliche Parameteränderung bestimmt, um das Hörgerät optimal an die Wünsche des Individuums heranzuführen. Diese Parameteränderungen werden über das Mobiltelefongerät 9 und die Kommunikationsverbinden K bzw. K₁, K₂, bevorzugt ohne jeglichen weiteren Eingriff seitens des Individuums direkt am Hörgerät 1 am Ohr des Individuums umgesetzt.

Es versteht sich von selbst, dass insbesondere mit Einsatz einer ausgelagerten Datenbank, ggf. mit Rechenkapazität wie anhand von Fig. 3 erläutert, jederzeit auch verbesserte Anpass-Programme an das Telefongerät 9 übertragen werden können, sofern letzteres z.B. im Fitting-Menü offline eingesetzt werden soll. Signalverarbeitungs-Programme bzw. -Software am Hörgerät 1 können im Extremfall bereits für die erstmalige Konfiguration vom Server 25 geladen werden und darnach ab Server 25 gepflegt bzw. geupdatet werden.

Dabei werden für solche Dienstleistungen vorzugsweise die vom E-Commerce bekannten kommerziellen Möglichkeiten ausgenützt.

Im weiteren können Anpassungsoptimierungen, Updates der Programme etc. durchaus im Hintergrund des Normalbetriebes des Mobiltelefongerätes ablaufen, insbesondere auch dann, wenn zwischen Mobiltelefongerät und Hörgerät eine drahtlose, direkte Verbindung besteht.

Es versteht sich weiter von selbst, dass die erfindungsgemässe Fitting-Anlage, welche als Beispiel für die Anpassung eines einzelnen Hörgerätes erläutert wurde, sich gleichermassen eignet für die Anpassung binauraler Hörgeräte.

## Patentansprüche

1. Fitting-Anlage für die Anpassung mindestens eines Hörgerätes (1) an die Bedürfnisse eines Individuums, mit einer Eingabe-Einrichtung, welche drahtgebunden und/oder drahtlos mit einem Einstellungs-Steuereingang (Eₛ) am Hörgerät (1) wirkverbindbar ist, **dadurch gekennzeichnet, dass** die Eingabeeinrichtung ein Mobiltelefongerät (9) ist.

2. Anlage nach Anspruch 1, **dadurch gekennzeichnet, dass** die Wirkverbindung (K, K₁, K₂) zwischen Mobiltelefongerät (9) und Hörgerät (1) über einen Umsetzer (13) erfolgt, wobei zwischen Mobiltelefongerät (9) und Umsetzer (13) eine Mobiltelefon-eigene HF-Verbindung und/oder eine Infrarot-Verbindung (IR) und/oder eine akustische Verbindung besteht, zwischen Umsetzer (13) und Hörgerät (1) eine drahtgebundene und/oder drahtlose Verbindung (Ca).

3. Anlage nach Anspruch 1, **dadurch gekennzeichnet, dass** zwischen Mobiltelefongerät und Hörgerät eine akustische Verbindung besteht.

4. Anlage nach Anspruch 2, **dadurch gekennzeichnet, dass** der Umsetzer (13) als selbständige Einheit ausgebildet ist, oder im Hörgerät (1) oder Mobiltelefongerät (9) integriert ist.

5. Anlage nach einem der Ansprüche 1 bis 4, **dadurch gekennzeichnet, dass** das Mobiltelefongerät für die Kommunikation mit einem Kommunikationsnetz ausgebildet ist, vorzugsweise mit Internet und/oder einem Intranetz.

6. Anlage nach einem der Ansprüche 1 bis 5, **dadurch gekennzeichnet, dass** sie mindestens einen Server umfasst und das Mobiltelefongerät zur Kommunikation mit diesem Server ausgebildet ist, wobei zwischen Server und Mobiltelefongerät mindestens eine folgender Daten-Arten übertragen wird:
• Fitting-Programme vom Server zum Mobiltelefongerät
• Hörgeräte-Software vom Server via Mobiltelefongerät zum mindestens einen, letzterem zugeordneten Hörgerät
• Updates für Fitting- und/oder Hörgeräte-Software.

7. Anlage nach einem der Ansprüche 1 bis 6, **dadurch gekennzeichnet, dass** sie mindestens einen Server umfasst und das Mobiltelefongerät zur Kommunikation mit diesem Server ausgebildet ist, wobei dazwischen folgende Daten übertragen werden:
• Hörgerät-Individualdaten vom Mobiltelefongerät an den Server und/oder
• Hörgerät-Individual-Stelldaten vom Server ans Mobiltelefongerät.

8. Anlage nach einem der Ansprüche 1 bis 7, **dadurch gekennzeichnet, dass** das Mobiltelefongerät auch Hörgerätefernsteuerung ist.

## Claims

1. Fitting system for adapting at least one hearing device (1) to the needs of an individual, with an input device, which can be operatively connected in a wire-bound and/or wireless manner to a setting control input (E_{S}) on the hearing device (1), **characterized in that** the input device is a mobile telephone device (9).

2. System according to Claim 1, **characterized in that** the operative connection (K, K1, K2) between the mobile telephone device (9) and the hearing device (1) takes place via a converter (13), with an RF link and/or an infrared link (IR) and/or an acoustic link dedicated to the mobile telephone existing between the mobile telephone device (9) and the converter (13), a wire-bound and/or wireless link (Ca) existing between the converter (13) and the hearing device (1).

3. System according to Claim 1, **characterized in that** an acoustic link exists between the mobile telephone device and the hearing device.

4. System according to Claim 2, **characterized in that** the converter (13) is formed as an independent unit, or is integrated in the hearing device (1) or mobile telephone device (9).

5. System according to one of Claims 1 to 4, **characterized in that** the mobile telephone device is designed for communication with a communication network, preferably with the Internet and/or an intranet.

6. System according to one of Claims 1 to 5, **characterized in that** it comprises at least one server and the mobile telephone device is designed for communication with this server, at least one of the following types of data being transmitted between the server and the mobile telephone device:
• fitting programs from the server to the mobile telephone device
• hearing-device software from the server via the mobile telephone device to the at least one hearing device assigned to the latter
• updates for fitting and/or hearing-device software.

7. System according to one of Claims 1 to 6, **characterized in that** it comprises at least one server and the mobile telephone device is designed for communication with this server, the following data being transmitted between them:
• individual hearing device data from the mobile telephone device to the server and/or
• individual hearing device setting data from the server to the mobile telephone device.

8. System according to one of Claims 1 to 7, **characterized in that** the mobile telephone device is also a hearing-device remote control.

## Revendications

1. Système d'adaptation pour l'adaptation d'au moins un appareil de correction auditive (1) aux besoins d'un individu, avec une installation d'entrée qui peut être reliée fonctionnellement par fil et/ou sans fil à une entrée de commande de réglage (Eₛ) à l'appareil de correction auditive (1), **caractérisé en ce que** l'installation d'entrée est un téléphone mobile (9).

2. Système selon la revendication 1, **caractérisé en ce que** la liaison fonctionnelle (K, K₁, K₂) entre le téléphone mobile (9) et l'appareil de correction auditive (1) a lieu par un convertisseur (13), où existe entre le téléphone mobile (9) et le convertisseur (13) une liaison HF et/ou une liaison infrarouge (IR) et/ou une liaison acoustique propre au téléphone mobile, entre le convertisseur (13) et l'appareil de correction auditive (1) une liaison (Ca) par fil et/ou sans fil.

3. Système selon la revendication 1, **caractérisé en ce qu'**il existe entre le téléphone mobile et l'appareil de correction auditive une liaison acoustique.

4. Système selon la revendication 2, **caractérisé en ce que** le convertisseur (13) est réalisé comme unité indépendante ou est intégré dans l'appareil de correction auditive (1) ou dans le téléphone mobile (9).

5. Système selon l'une des revendications 1 à 4, **caractérisé en ce que** le téléphone mobile est réalisé pour la communication avec un réseau de communication, de préférence avec l'Internet et/ou avec un réseau interne.

6. Système selon l'une des revendications 1 à 5, **caractérisé en ce qu'**il comporte au moins un serveur, et **en ce que** le téléphone mobile est réalisé pour la communication avec ce serveur, où est transmis entre le serveur et le téléphone mobile au moins l'un des types de données suivants :
• des programmes d'adaptation du serveur au téléphone mobile
• du logiciel pour des appareil de correction auditive du serveur par le téléphone mobile à au moins un appareil de correction auditive associé à ce dernier
• des mises à jour pour le logiciel d'adaptation et/ou des appareils de correction auditive.

7. Système selon l'une des revendications 1 à 6, **caractérisé en ce qu'**il comporte au moins un serveur, et **en ce que** le téléphone mobile est réalisé pour la communication avec ce serveur, où sont transmis entre ceux-ci les données suivantes :
• des données individuelles de l'appareil de correction auditive du téléphone mobile au serveur et/ou
• des données de réglage individuelles de l'appareil de correction auditive du serveur au téléphone mobile.

8. Installation selon l'une des revendications 1 à 7, **caractérisée en ce que** le téléphone mobile est également une commande à distance de l'appareil de correction auditive.
